# EUROPÄISCHE PATENTANMELDUNG

(11) **EP 0 977 193 A1**
(43) Veröffentlichungstag der Anmeldung: **02.02.2000**
(21) Anmeldenummer: 98114318.3
(22) Anmeldetag: 30.07.1998
(51) Int. Cl.: G11B 7/24, G11B 7/00

(54) **Vorrichtung zur optischen Aufzeichnung und Wiedergabe von Daten**

(71) Anmelder: Sieber, Guido, 82293 Vogach (DE)
(72) Erfinder: Sieber, Guido, 82293 Vogach (DE)
(74) Vertreter: Strobel, Wolfgang, Dipl.-Ing.

(57) **Zusammenfassung**

Die vorliegende Erfindung betrifft eine Vorrichtung zur optischen Aufzeichnung und Wiedergabe von Daten mit einem sich drehenden Aufzeichnungsträger, der an einer Seite eine Abtastoberfläche aufweist und mit einer optischen Einrichtung, die einen zur Abtastung geeigneten Laserstrahl erzeugt, die Abtastoberfläche richtet und das reflektierte Licht erfaßt. Die Vorrichtung zeichnet sich insbesondere dadurch aus, daß der Aufzeichnungsträger zumindest teilsphärisch ausgebildet ist, und daß die optische Einrichtung schwenkbeweglich im wesentlichen im Mittelpunkt des sphärischen Aufzeichnungsträgers angeordnet und elektromagnetisch verschwenkbar ist, so daß sie einen winkelmäßig vorbestimmten Bereich abtasten kann.

## Beschreibung

Die vorliegende Erfindung betrifft eine Vorrichtung zur optischen Aufzeichnung und Wiedergabe von Daten, nach dem Oberbegriff des Anspruchs 1.

Herkömmlicherweise wird bei einer Vorrichtung zur optischen Aufzeichnung und Wiedergabe von Daten des Standes der Technik eine flache Aufzeichnungsfläche eines platten- oder scheibenartigen Aufzeichnungsträgers verwendet, die mittels eines Laserstrahls bestrahlt wird, um eine Fokussierung auf der Aufzeichnungsoberfläche zur Datenaufzeichnung und Datenwiedergabe vorzunehmen. Der scheibenförmige Aufzeichnungsträger, beispielsweise eine Festplatte eines Computers oder eine Compact Disc, ist drehbar gelagert und wird zum Abtasten durch den Laserstrahl mit einer vorbestimmten Drehzahl gedreht. Die Abtastoberfläche des Aufzeichnungsträgers weist sogenannte Spuren auf, in die der Laserstrahl entsprechend fokussiert wird je nach gewünschtem Spurabschnitt.

Bei den in Rede stehenden Aufzeichnungsträgern wird grundsätzlich in drei Typen unterschieden. Ein erster Typ wird als reiner Lese-Typ bezeichnet, und ist hauptsächlich auf Compact Discs, CD-Roms ausgebildet. Hierbei werden die gespeicherten Informationen lediglich abgetastet und eine Veränderung dieser Information erfolgt nicht.

Ein zweiter grundsätzlicher Typ ist jener, bei dem einmal eine Information eingeschrieben werden kann und damit den Anwendern ermöglicht selbst Daten aufzubringen. Im allgemeinen Jargon wird dies mit "eigenem CD-Brennen" bezeichnet.

Ein dritter Typ ist jener, der stets wiederbeschreibbar ist, d. h., daß ein erneutes Einschreiben von Daten mittels eines Laserstrahls möglich sein muß. Die vorliegende Erfindung ist für alle drei Typen geeignet.

Beim bisherigen Stand der Technik muß aufgrund der plattenförmigen Ausgestaltung der Abtastoberfläche die optische Einrichtung, die einen zur Abtastung geeigneten Laserstrahl erzeugt, auf die Abtastoberfläche richtet und das reflektierte Licht erfaßt, entlang eines linearen Bewegungswegs über annähernd halben Durchmesser des scheibenfömigen Aufzeichnungsträgers mit hoher Geschwindigkeit bewegt werden. Hierzu ist die optische Einrichtung an einer entsprechenden Führungsachse angebracht und wird entlang dieser Führungsachse bewegt.

Da sich die scheibenförmigen Aufzeichnungsträger mit mehreren Tausen Umdrehungen pro Minute drehen, ist ersichtlich, daß entsprechend hohe Bewegungsgeschwindigkeiten der optischen Einrichtung erforderlich sind.

Insbesondere bei Verwendung des sich drehenden Aufzeichnungsträgers als Festplatte eines Computers, also dem stets wiederbeschreibbaren dritten Typ, tritt mit zunehmender Lebensdauer der Nachteil auf, daß bei Wiederbeschreiben ein entsprechender Platz auf dem Aufzeichnungsträger gefunden werden muß. Da in der Regel nur Teile von Bereichen überschrieben werden können und das Platzangebot mit dem Platzbedarf in der Regel nicht übereinstimmt, werden die einzuschreibenden Programme oder Daten zerstückelt und an mehreren Stellen eingeschrieben, wobei eine entsprechende Zuordnungsadresse mitvergeben werden muß. Dies führt nachteiligerweise dazu, daß die optische Einrichtung ständig den Abtastort wechseln muß und stets an die nachfolgende Stelle verschoben werden muß, was ersichtlich zu einer Verlangsamung des Abtast- oder Einschreibvorganges aufgrund eigener Massenträgheiten des optischen Systems führt. Damit werden insbesondere wiederbeschreibbare Festplattensysteme mit der Zeit immer langsamer, und die Leistung des Computers bzw. Rechners nimmt drastisch ab.

Der vorliegenden Erfindung liegt deshalb die Aufgabe zugrunde, eine Vorrichtung zur optischen Aufzeichnung und zur Wiedergabe von Daten derart zu verbessern, daß die Abtastzeiten deutlich reduziert werden und somit die Leistungsfähigkeit derartiger Vorrichtungen über einen langen Zeitraum erheblich größer ist als bei herkömmlichen Systemen.

Diese Aufgabe wird durch die Merkmale des Anspruchs 1 bzw. des Anspruchs 2 gelöst.

Dadurch, daß der Aufzeichnungsträger sphärisch bzw. zumindest teilsphärisch ausgebildet ist, und daß die optische Einrichtung schwenkbeweglich im wesentlichen im Mittelpunkt des sphärischen Aufzeichnungsträgers angeordnet und elektromagnetisch verschwenkbar ist, so daß sie einem winkelmäßig vorbestimmten Bereich abtasten kann, wird erreicht, daß die Abtastzeiten erheblich reduziert werden, da insbesondere eine mechanische Lagerung und Bewegungsanregung entfällt. Das winkelmäßige Überstreichen der entsprechenden Bereiche des Aufzeichnungsträgers kann deutlich schneller erfolgen als bei einem scheibenförmigen Aufzeichnungsträger.

Eine noch weitere Reduzierung der Abtastzeit wird erfindungsgemäß dadurch erreicht, daß die optische Einrichtung aus einem starr angeordneten Laser und einer starr angeordneten Reflexionssignalempfangseinrichtung gebildet ist, die mit einem im Brenn- bzw. Mittelpunkt des Aufzeichnungsträgers ablekbaren Spiegel zusammenwirkt. Dabei sind Lasersendeeinrichtung und Empfangseinrichtung zwischen dem Mittelpunkt und dem Aufzeichnungsträger im wesentlichen auf der Drehachse angeordnet

Vorteilhafterweise ist der Aufzeichnungsträger halbkugelförmig ausgebildet, wodurch ein sehr großer Abtastbereich geschaffen wird.

In einer bevorzugten alternativen Ausführungsform ist der Aufzeichnungsträger im wesentlichen viertelkugelförmig ausgebildet, wodurch ein relativ kleiner Winkel ausreicht, um den gesamten Aufzeichnungsbereich abzutasten.

Vorteilhafterweise betragen die Winkelbereiche ca. 15 - 60°, bevorzugt 25 - 45° und noch weiter bevorzugt ca. 35°.

In einer alternativen Ausführungsform kann ein weiterer zweiter Kugelabschnitt vorgesehen werden, so daß der Aufzeichnungsträger als Vollkugel ausgebildet sein kann und eine entsprechend große Aufzeichnungsfläche aufweist.

Mit besonderem Vorteil ist der zweite Kugelabschnitt punktsymmetrisch zum ersten Kugelabschnitt angeordnet, und die optische Einrichtung weist eine Abtastung mit zwei Laserstrahlen auf. Dies hat beispielsweise den großen Vorteil, daß der eine Kugelabschnitt eine Spiegelung des anderen ist, und damit eine permanente Datensicherung möglich ist. Bei Ausfall eines der Kugelabschnitte ist dann der zweite Kugelabschnitt wegen redundanter Daten ohne Verzögerung weiter abgreifbar.

Andererseits besteht auch die Möglichkeit der Abtastung bzw. Einschreibung verschiedener Daten, wenn die beiden Laserstrahlen unabhängig voneinander bewegt werden.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Figur 1:: eine schematische und prinzipielle Darstellung der erfindungsgemäßen Vorrichtung zur optischen Aufzeichnung und Wiedergabe von Daten, und
- Figur 2:: in vergrößertem Maßstab die Einzelheit "Z" von Fig. 1.

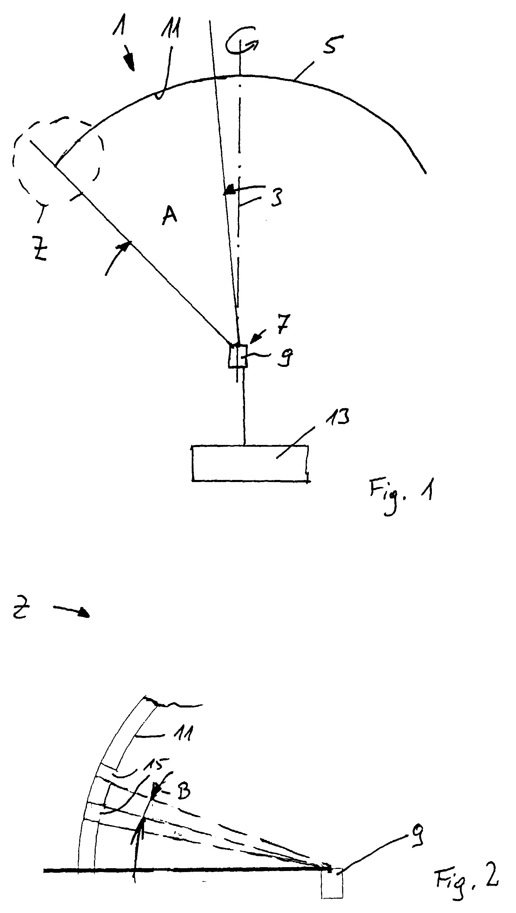

In Fig. 1 ist schematisch der Aufbau einer Vorrichtung 1 zur optischen Aufzeichnung und Wiedergabe von Daten dargestellt. Die Vorrichtung 1 weist einen bezüglich einer Drehachse 3 symmetrisch aufgebauten und angeordneten Aufzeichnungsträger 5 auf, der im Beispielsfalle von Fig. 1 im wesentlichen viertelkugelförmig ausgebildet ist.

Im Brennpunkt oder Mittelpunkt 7 ist eine optische Einrichtung 9 angeordnet, die einen zur Abtastung geeigneten Laserstrahl erzeugt, auf eine Abtastfläche 11 richtet und das reflektierte Licht erfaßt.

Die optische Einrichtung 9 ist elektromagnetisch gelagert und kann somit in kürzester Zeit bewegt werden. Sie kann einen maximalen Winkelbereich A überstreichen. Der Winkelbereich kann ca. 15-60°, bevorzugt 25-45° und besonders bevorzugt ca. 35° betragen.

Mit der optischen Einrichtung 9 ist eine Steuerungs- und Verarbeitungseinrichtung 13 verbunden, die die entsprechenden Steuerungsbefehle zur optischen Einrichtung sendet und diese damit steuert.

Weiterhin steuert die Steuerungs- und Verarbeitungseinrichtung 13 den Signalfluß zur optischen Einrichtung und die Aufnahme der reflektierten Signale zur weiteren Verarbeitung.

Mit Hilfe der Steuerungs- und Verarbeitungseinrichtung 13 können auch Befehle zur optischen Einrichtung 9 übertragen werden, die den abzutastenden Ort auf der Abtastfläche 11 angeben. Herkömmlicherweise sind die Adressen der entsprechenden Abtastabschnitte, beispielsweise einzelne Programme auf der Abtastfläche 11, beispielsweise in der Nähe der Drehachse 3 angeordnet und nach Abtasten der entsprechenden Adresse wird die optische Einrichtung 9 an die richtige Stelle geschwenkt.

In Fig. 2 ist in vergrößertem Maßstab die Einzelheit "Z" dargestellt. Hier wird im wesentlichen verdeutlicht, wie die Abtastung der Abtastoberfläche 11 erfolgt. In dieser Abtastoberfläche 11 sind einzelne Spuren 15 vorhanden, die voneinander bestandet angeordnet sind.

Die Spuren 15 sind, wie aus Fig. 2 ersichtlich, somit mit einem vorbestimmten Winkelabstand B voneinander getrennt.

Die vorliegende Erfindung ist nicht auf das dargestellte Ausführungsbeispiel beschränkt. So kann in einer alternativen Ausführungsform die optische Einrichtung auch aus einem starr angeordneten Laser und einer starr angeordneten Reflexionssignalempfangseinrichtung bestehen, die mit einem im Brenn- bzw. Mittelpunkt 7 ablekbaren Spiegel zusammenwirkt. Dabei sind Lasersendeeinrichtung und Empfangseinrichtung zwischen dem Mittelpunkt 7 und dem Aufzeichnungsträger 5 im wesentlichen auf der Drehachse 3 angeordnet

Mit Hilfe der erfindungsgemäßen Vorrichtung zur optischen Aufzeichnung und Wiedergabe von Daten wird somit ein erheblich schnelleres Abtastsystem geschaffen, so daß insbesondere bei der Anwendung bei Festplatten erheblich geringere Zugriffszeiten ermöglicht werden.

Da in der alternativen Ausführungsform der Spiegel noch einfacher und schneller verschwenkbar ist, kann die Abtastzeit dadurch noch weiter verkürzt werden.

## Patentansprüche

1. Vorrichtung zur optischen Aufzeichnung und Wiedergabe von Daten, mit einem sich drehenden Aufzeichnungsträger (5), der an einer Seite eine Abtastoberfläche (11) aufweist, und mit einer optischen Einrichtung (9), die einen zu einer Abtastung geeigneten Laserstrahl erzeugt, auf die Abtastoberfläche richtet und das reflektierte Licht erfaßt,
dadurch gekennzeichnet,
daß der Aufzeichnungsträger (5) zumindest teilsphärisch ausgebildet ist, und daß die optische Einrichtung (9) schwenkbeweglich im wesentlichen im Mittelpunkt (7) des Aufzeichnungsträgers (5) angeordnet und elektromagnetisch schwenkbar ist, so daß sie einen winkelmäßig vorbestimmten Bereich (Winkel A) abtasten kann.

2. Vorrichtung zur optischen Aufzeichnung und Wiedergabe von Daten, mit einem sich drehenden Aufzeichnungsträger (5), der an einer Seite eine Abtastoberfläche (11) aufweist, und mit einer optischen Einrichtung (9), die einen zu einer Abtastung geeigneten Laserstrahl erzeugt, auf die Abtastoberfläche richtet und das reflektierte Licht erfaßt,
dadurch gekennzeichnet,
daß der Aufzeichnungsträger (5) zumindest teilsphärisch ausgebildet ist, und daß die optische Einrichtung starr und im wesentlichen auf der Drehachse (3) zwischen Mittelpunkt (7) und Aufzeichnungsträger (5) angeordnet ist und mit einem im Mittelpunkt (7) angeordneten schwenkbeweglichen Spiegel zusammenwirkt, so daß der Spiegel einen winkelmäßig vorbestimmten Bereich (Winkel A) abtasten kann.

3. Vorrichtung nach Anspruch 1 oder 2, dadurch gekennzeichnet, daß der zumindest teilsphärische Aufzeichnungsträger (5) eine Halbkugel ist.

4. Vorrichtung nach Anspruch 1 oder 2, dadurch gekennzeichnet, daß der teilsphärische ausgebildete Aufzeichnungsträger (5) eine Viertelkugel (Fig. 1) ist.

5. Vorrichtung nach einem der Ansprüche 1 bis 4, dadurch gekennzeichnet, daß der Winkelbereich (Winkel A) ca. 15-60°, bevorzugt 25-45° und besonders bevorzugt ca. 30-35° beträgt.

6. Vorrichtung nach einem der Ansprüche 1 bis 5, dadurch gekennzeichnet, daß dem ersten Kugelabschnitt (5) entgegengesetzt ein zweiter Kugelabschnitt angeordnet ist.

7. Vorrichtung nach Anspruch 6, dadurch gekennzeichnet, daß die optische Einrichtung (9) zwei Laserstrahlen aussenden und deren Reflektion empfangen kann, die gleichzeitig spiegelbildlich angeordnete Bereiche der Abtastoberfläche (11) abtasten.

8. Vorrichtung nach Anspruch 6, dadurch gekennzeichnet, daß die optische Einrichtung zwei getrennte Laserstrahlerzeugungs- und Reflektionserfassungseinrichtungen aufweist, die getrennt voneinander getrennte Kugelabschnitte des Aufzeichnungsträgers abtasten können.
